# DEMANDE DE BREVET EUROPEEN

(11) **EP 0 897 252 A1**
(43) Date de publication de la demande: **17.02.1999**
(21) Numéro de dépôt: 98401906.7
(22) Date de dépôt: 27.07.1998
(51) Int. Cl.: H04Q 7/38, H04Q 7/22

(54) **Procédé pour la gestion des ressources de transmission dans un systeme de radiocommunications mobiles**

(30) Priorité: 29.07.1997 FR 9709659
(71) Demandeur: ALCATEL ALSTHOM COMPAGNIE GENERALE D'ELECTRICITE, 75008 Paris (FR)
(72) Inventeur: Baudet, Serge, 92800 Puteaux (FR)
(74) Mandataire: El Manouni, Josiane

(57) **Abrégé**

Procédé de coordination entre station mobile (MS) et réseau (BSS), pour la gestion des ressources de transmission dans un système de radiocommunications mobiles fournissant plusieurs types de services, et dans lequel une procédure de coordination est mise en oeuvre séparément pour chacun des types de services auxquels une station mobile accède simultanément, ce procédé étant essentiellement caractérisé en ce qu'il comporte une étape (1) au cours de laquelle la station mobile informe le réseau d'une entrée en simultanéité de services, afin de mettre en oeuvre de façon non totalement indépendante les procédures de coordination relatives aux différents types de services auxquels la station mobile accède simultanément, pour tenir compte de cette simultanéité de services, de manière à optimiser l'utilisation des ressources de transmission, pour ladite coordination.

## Description

La présente invention concerne d'une manière générale les systèmes de radiocommunications mobiles, plus particulièrement la gestion des ressources de transmission dans ces systèmes, et plus particulièrement encore la coordination entre station mobile et réseau, pour la gestion des ressources de transmission dans ces systèmes.

La présente invention concerne en outre plus particulièrement le cas de réseaux de radiocommunications mobiles aptes à fournir plusieurs types de services, tels que notamment des services dits en mode circuit et des services dits en mode paquet.

On rappelle que le mode circuit est un mode dans lequel les ressources de transmission sont allouées pour la durée d'une communication, qu'il y ait ou non transmission d'informations, alors que le mode paquet est un mode dans lequel l'allocation de ressources de transmission est susceptible d'être modifiée en cours de communication, ce qui permet un meilleur partage des ressources de transmission entre plusieurs communications, en fonction des besoins instantanés de chacune d'elles. Le mode circuit est ainsi plus particulièrement adapté aux communications vocales, tandis que le mode paquet est plus particulièrement adapté à la transmission de données, notamment aux cas de débits irréguliers dans le temps, et/ou dissymétriques dans les deux sens de transmission.

La présente invention concerne en outre plus particulièrement le cas de stations mobiles permettant d'accéder simultanément à plusieurs types de services fournis par un réseau de radiocommunications mobiles, tels que notamment les services en mode circuit et les services en mode paquet.

La présente invention est ainsi notamment applicable aux systèmes de radiocommunications mobiles dans lesquels un utilisateur de station mobile peut simultanément être en communication en mode paquet, notamment pour une application du type courrier électronique (ou "E-Mail") , ou encore accès à une base de données distante, et en communication en mode circuit, notamment pour une communication téléphonique.

Les services en mode paquet fournis par les systèmes de radiocommunications mobiles cellulaires, tels que notamment le service GPRS (pour "General Packet Radio Service"), réutilisent les principes de fonctionnement de ces systèmes prévus pour les services en mode circuit, avec des adaptations dues aux particularités du mode paquet par rapport au mode circuit. Ainsi, une procédure particulière a été introduite, pour les services en mode paquet, en plus de la procédure correspondante existant pour les services en mode circuit, pour la coordination entre station mobile et réseau, dans la préparation du transfert d'une communication en cours, d'une cellule à une autre.

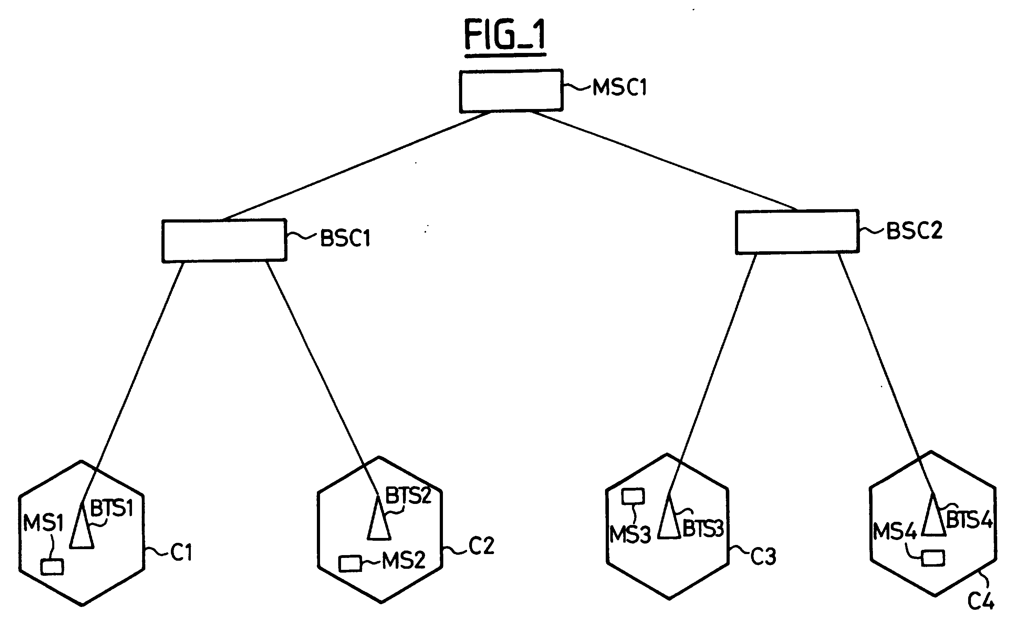

Avant de rappeler les principes de ces procédures de coordination, on rappelle, en relation avec la figure 1, l'architecture générale d'un système de radiocommunications mobiles cellulaire, tel que notamment le système GSM.

Ce système comporte essentiellement:
- un ensemble de stations de base, appelées aussi BTS (pour "Base Transceiver Station"), telles que celles notées BTS1, BTS2, BTS3 et BTS4, chacune de ces stations de base étant affectée à une cellule (notée respectivement C1, C2, C3, et C4), et ces stations de base étant en relation, dans ces cellules, avec des stations mobiles telles que celles notées MS1, MS2, MS3, MS4,
- un ensemble de contrôleurs de stations de base, appelés aussi BSC (pour "Base Station Controller"), tels que ceux notés BSC1 et BSC2, chacun de ces BSC contrôlant, du point de vue de la gestion des ressources de transmission, un sous-ensemble de stations de base, le contrôleur de stations de base BSC1 contrôlant dans l'exemple illustré les stations de base BTS1 et BTS2, et le contrôleur de stations de base BSC2 contrôlant dans cet exemple les stations de base BTS3 et BTS4,
- un ensemble de centres de commutation mobile, appelés aussi MSC ("pour Mobile Switching Center"), tels que celui noté MSC1, chacun de ces MSC étant en relation avec des réseaux extérieurs tels que notamment les réseaux PSTN (pour "Public Switched Telephone Network") ou ISDN (pour "Integrated Services Digital Network"), et contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2.

L'ensemble formé par les BTS et BSC est aussi appelé BSS (pour "Base Station Sub-System") et constitue l'entité chargée de la gestion des ressources de transmission dans ce système.

Pour une description plus complète d'un tel système, on pourra se référer par exemple au livre de M. MOULY et M.B. PAUTHET, intitulé "The GSM System for Mobile Communications" (Palaiseau, France, 1992, ISBN:2-9507190-07-7).

Dans le cas de service en mode circuit, la coordination entre station mobile et réseau pour la préparation d'un transfert de communication entre cellules est telle que c'est le BSS qui contrôle cette préparation, c'est-à-dire qui décide d'effectuer un tel transfert et qui sélectionne la cellule cible vers laquelle la communication est à transférer, ceci en tenant compte de résultats de mesures que lui transmet la station mobile (ces résultats de mesures indiquant principalement le niveau de puissance des signaux reçus par la station mobile pour sa cellule serveuse ainsi que pour des cellules voisines). Une fois la cellule cible sélectionnée, et les ressources à utiliser dans cette cellule cible déterminées, le BSS adresse à la station mobile une commande de commutation vers ces nouvelles ressources, dans cette cellule cible. L'ensemble de cette procédure est aussi appelé "handover". Une description plus complète d'une telle procédure pourra également être trouvée dans le livre mentionné plus haut. La procédure résumée ci-dessus s'applique dans le cas où la cellule serveuse et la cellule cible appartiennent au même BSS ("handover interne"). Dans le cas où les cellules cible et serveuse appartiennent à des BSS différents, le MSC intervient dans la coordination de la procédure entre BSS ("handover externe"). Dans tous les cas, c'est le réseau et non la station mobile qui contrôle la procédure de "handover".

Dans le cas de service en mode paquet, diverses techniques de coordination entre station mobile et réseau sont connues pour la préparation d'un tel transfert.

Suivant une première technique (dite ici NC0), la station mobile décide de manière autonome d'effectuer un tel transfert et sélectionne elle-même la cellule cible vers laquelle la communication est à transférer, en tenant compte des résultats de mesures qu'elle effectue. Une fois la cellule cible sélectionnée, la station mobile adresse au BSS une demande d'allocation de ressource dans cette cellule cible, suivant des principes similaires à ceux utilisés lors de l'accès initial au réseau par la station mobile, où la station mobile met également en oeuvre, de manière autonome, une procédure dite de sélection de cellule, avant d'adresser au réseau une demande d'allocation de ressource dans la cellule ainsi sélectionnée. Une telle procédure de transfert est aussi, pour cette raison, appelée "resélection de cellule".

Suivant une deuxième technique (dite ici NC1), la station mobile peut décider de manière autonome d'effectuer un tel transfert et sélectionner la cellule cible vers laquelle la communication est à transférer, en tenant compte de résultats de mesures qu'elle effectue, et transmet par ailleurs les résultats de ces mesures au réseau.

Suivant une troisième technique (dite ici NC2), comparable à celle utilisée pour le mode circuit, le BSS décide d'effectuer un tel transfert et sélectionne la cellule cible vers laquelle la communication est à transféer, en tenant compte des résultats de mesures que lui transmet la station mobile. La station mobile ne peut pas prendre elle-même l'initiative de changer de cellule.

Ces techniques correspondent ainsi à des degrés d'autonomie décroissants de la station mobile, ou, ce qui revient au même, à des degrés de contrôle croissants par le réseau, et donc à des degrés croissants de consommation de ressources de transmission pour les procédures de coordination correspondantes, notamment pour l'envoi de messages de signalisation de la station mobile vers le réseau (en l'occurrence des messages de signalisation destinés à contenir les résultats de mesures effectuées par la station mobile).

Il est en outre connu, pour optimiser la gestion des ressources de transmission en mode paquet, de faire sélectionner, par le réseau, celle de ces procédures qui convient le mieux à une situation donnée, la station mobile étant alors informée, par le réseau, de la procédure ainsi sélectionnée.

Il est en outre connu, dans le cas d'une station mobile accédant simultanément à des services en mode circuit et en mode paquet, de mettre en oeuvre une procédure de coordination pour chacun de ces modes, de façon totalement indépendante, sans tenir compte de la simultanéité de services. En effet, dans un réseau tel que le réseau GSM, le BSS, qui est l'entité chargée de la gestion des ressources de transmission, en relation avec la station mobile pour ladite coordination, ne dispose pas de moyens lui permettant de détecter une telle entrée en simultanéité de services.

La présente invention vise à optimiser le fonctionnement de tels systèmes, dans un tel cas de simultanéité de services.

La présente invention a ainsi pour objet un procédé de coordination entre station mobile et réseau, pour la gestion des ressources de transmission dans un système de radiocommunications mobiles fournissant plusieurs types de services, et dans lequel une procédure de coordination est mise en oeuvre séparément pour chacun des types de services auxquels une station mobile accède simultanément, ce procédé étant essentiellement caractérisé en ce qu'il comporte une étape au cours de laquelle la station mobile informe le réseau d'une entrée en simultanéité de services, afin de mettre en oeuvre de façon non totalement indépendante les procédures de coordination relatives aux différents types de services auxquels la station mobile accède simultanément, pour tenir compte de cette simultanéité de services, de manière à optimiser l'utilisation des ressources de transmission pour ladite coordination.

L'invention permet ainsi d'optimiser l'utilisation des ressources de transmission pour ladite coordination. Notamment, dans le cas de coordination entre station mobile et réseau pour la préparation d'un transfert de communication d'une cellule à une autre, et dans le cas de services constitué par les services en mode paquet et en mode circuit, l'invention permet d'éviter que la station mobile ne soit amenée à transmettre par deux fois des résultats de mesures au réseau, pour le mode circuit et pour le mode paquet. Les ressources de transmission ainsi libérées peuvent alors être utilisées à d'autres fins, par exemple pour des communications avec d'autres stations mobiles, ce qui contribue à améliorer globalement la qualité de service.

La présente invention a également pour objet une station mobile, et une entité pour réseau de radiocommunications mobiles (notamment BSS pour un réseau tel que le réseau GSM) en relation avec les stations mobiles pour la mise en oeuvre d'un tel procédé.

D'autres objets et caractéristiques de la présente invention apparaîtront à la lecture de la description suivante d'exemples de réalisation, faite en relation avec les dessins ci-annexés, dans lesquels:
- la figure 1 rappelle schématiquement l'architecture d'un système tel que le système GSM,
- la figure 2 est un diagramme illustrant les différentes étapes d'échange de messages de signalisation entre station mobile et réseau, pour la mise en oeuvre d'un procédé de coordination suivant l'invention,
- la figure 3 est un schéma destiné à illustrer le type de moyens à mettre en oeuvre dans une station mobile, pour utiliser un procédé de coordination suivant l'invention,
- la figure 4 est un schéma destiné à illustrer le type de moyens à mettre en oeuvre pour utiliser un procédé de coordination suivant l'invention, dans une entité de réseau de radiocommunications mobiles (notamment BSS pour un réseau tel que le réseau GSM) en relation avec les stations mobiles pour ladite coordination.

A titre d'exemple on considère plus particulièrement dans ce qui suit la procédure de coordination entre station mobile et réseau pour la préparation d'un transfert de communication d'une cellule à une autre, et le cas de services en mode circuit et en mode paquet.

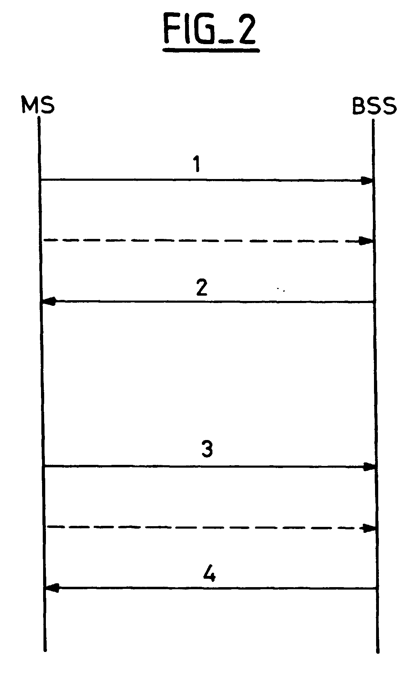

Suivant l'invention, lorsque la station mobile MS entre en simultanéité de services, elle en informe le réseau (en l'occurrence le BSS dans le cas d'un réseau tel que le réseau GSM), ce qui correspond à l'étape notée 1 sur la figure 2.

Le réseau peut alors sélectionner, pour le mode paquet, une procédure de coordination moins consommatrice de ressources de transmission que celle qu'il avait précédemment sélectionnée, s'il était en mode paquet avant d'entrer simultanément en mode paquet et en mode circuit, ou que celle qu'il aurait sélectionnée, en l'absence d'une telle information, s'il était en mode circuit avant d'entrer simultanément en mode circuit et en mode paquet, et il informe la station mobile de la procédure ainsi sélectionnée, ce qui correspond à l'étape notée 2.

Notamment, le réseau peut ainsi sélectionner la procédure dite NC0, ou la procédure dite NC1, au lieu de la procédure dite NC2. Il peut aussi sélectionner la procédure dite NC0 au lieu de la procédure dite NC1.

Si le réseau avait précédemment sélectionné la procédure dite NC0, ou s'il aurait (en l'absence d'information par la station mobile) sélectionné la procédure dite NC0, il continue à sélectionner cette procédure.

La station mobile adapte alors son fonctionnement en conséquence.

Tant que la station mobile n'a pas reçu de réponse du réseau, elle ne modifie pas son fonctionnement et elle renouvelle éventuellement (comme indiqué en pointillés sur la figure) l'étape 1, éventuellement à l'expiration d'un délai prédéterminé, jusqu'à obtenir une telle réponse.

D'une manière plus générale, quel que soit l'exemple d'application, le procédé de coordination suivant l'invention est tel qu'il comporte une étape au cours de laquelle la station mobile informe le réseau d'une entrée en simultanéité de services, afin de mettre en oeuvre de façon non totalement indépendante les procédures de coordination relatives aux différents types de services auxquels la station mobile accède simultanément, pour tenir compte de cette simultanéité de services, de manière à optimiser l'utilisation des ressources de transmission pour ladite coordination.

Notamment, dans le cas de réseau apte à sélectionner, pour un premier type de service, l'une ou l'autre de plusieurs procédures de coordination, correspondant respectivement à des degrés d'autonomie décroissants de la station mobile, ou à des degrés croissants de contrôle par le réseau, et, pour un deuxième type de service, une procédure de coordination unique, correspondant à un degré donné d'autonomie de la station mobile, ou à un degré donné de contrôle par le réseau, le procédé de coordination suivant l'invention est tel qu'il comporte une étape au cours de laquelle la station mobile informe le réseau d'une entrée en simultanéité de services, afin, le cas échéant, de faire sélectionner par le réseau, pour ledit premier type de service, une procédure de coordination correspondant à un degré de contrôle par le réseau, qui tienne compte du degré de contrôle par le réseau pour la procédure de coordination relative audit deuxième type de service.

Dans l'exemple d'application considéré ici, c'est-à-dire dans le cas de premier type de service constitué par des services en mode paquet, de deuxième type de service constitué par des services en mode circuit, et de coordination en vue de la préparation de transfert de communication en cours d'une cellule à une autre dans un réseau de radiocommunications cellulaire, le réseau étant apte à sélectionner, pour le mode paquet, l'une ou l'autre de plusieurs procédures de coordination correspondant respectivement à des degrés d'autonomie décroissants de la station mobile, ou à des degrés croissants de contrôle par le réseau, et, pour le mode circuit, une procédure de coordination unique, correspondant à un degré le plus élevé de contrôle par le réseau, le procédé de coordination suivant l'invention comporte ainsi une étape au cours de laquelle la station mobile informe le réseau d'une entrée en simultanéité de services, afin , le cas échéant, de faire sélectionner par le réseau une procédure de coordination correspondant à un degré moins élevé de contrôle par le réseau, pour le mode paquet.

En outre, dans l'exemple d'application considéré, dans le cas où il est mis fin à la communication en mode circuit avant de mettre fin à la communication en mode paquet, la station mobile peut de même en informer le réseau, ce qui correspond à l'étape notée 3.

Le réseau peut alors resélectionner, pour le mode paquet, une procédure de coordination plus consommatrice de ressources de transmission, et il informe la station mobile de la procédure ainsi sélectionnée, ce qui correspond à l'étape notée 4.

Notamment, le réseau peut ainsi sélectionner la procédure dite NC2, ou la procédure dite NC1, au lieu de la procédure dite NC0. Il peut aussi sélectionner la procédure dite NC2 au lieu de la procédure dite NC1.

La station mobile adapte alors son fonctionnement en conséquence.

Tant que la station mobile n'a pas reçu de réponse du réseau, elle ne modifie pas son fonctionnement et elle renouvelle éventuellement (comme indiqué en pointillés sur la figure 2) l'étape 3, éventuellement à l'expiration d'un délai prédéterminé, jusqu'à obtenir une telle réponse.

D'une manière plus générale, quel que soit l'exemple d'application, le procédé de coordination suivant l'invention est tel qu'il peut en outre comporter une étape au cours de laquelle la station mobile informe le réseau d'une fin de simultanéité de services, afin, le cas échéant, de remettre en oeuvre de façon indépendante une procédure de coordination relative à celui des types de services auxquels la station mobile continue d'accéder.

Notamment, dans le cas de réseau apte à sélectionner, pour un premier type de service, l'une ou l'autre de plusieurs procédures de coordination, correspondant respectivement à des degrés d'autonomie décroissants de la station mobile, ou à des degrés croissants de contrôle par le réseau, et, pour un deuxième type de service, une procédure de coordination unique, correspondant à un degré donné d'autonomie de la station mobile, ou à un degré donné de contrôle par le réseau, le procédé suivant l'invention est tel qu'il peut en outre comporter une étape au cours de laquelle la station mobile informe le réseau d'une fin de simultanéité de services, afin, le cas échéant, de faire resélectionner par ce réseau, de manière indépendante, une procédure de coordination pour ledit premier type de service.

Dans l'exemple d'application considéré ici, c'est-à-dire dans le cas de premier type de service constitué par des services en mode paquet, de deuxième type de service constitué par des services en mode circuit, et de coordination en vue de la préparation de transfert de communication en cours d'une cellule à une autre dans un réseau de radiocommunications cellulaire, le réseau étant apte à sélectionner, pour le mode paquet, l'une ou l'autre de plusieurs procédures de coordination, correspondant respectivement à des degrés d'autonomie décroissants de la station mobile, ou à des degrés croissants de contrôle par le réseau, et, pour le mode circuit, une procédure de coordination unique, correspondant à un degré le plus élevé de contrôle par le réseau, le procédé de coordination suivant l'invention peut ainsi comporter en outre une étape au cours de laquelle la station mobile informe le réseau d'une fin de simultanéité de services, afin, le cas échéant, de faire resélectionner par ce réseau une procédure de coordination correspondant à un degré plus élevé de contrôle par le réseau, pour le mode paquet.

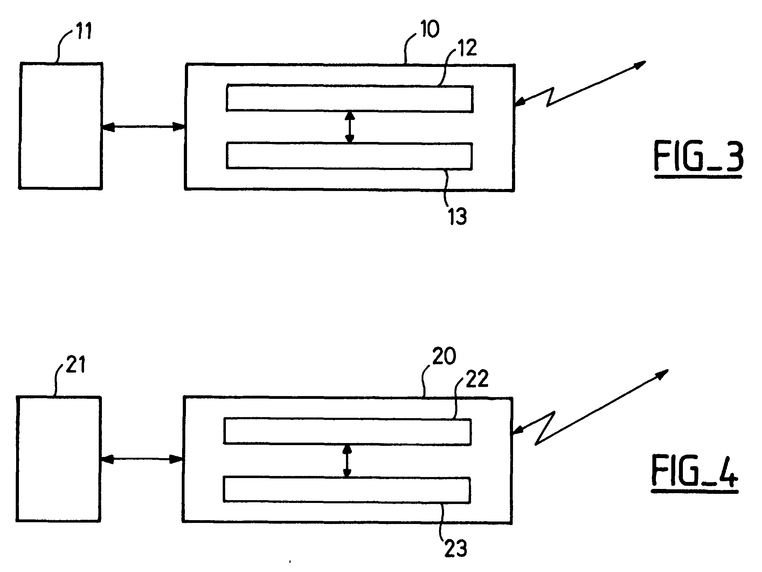

Le schéma de la figure 3 est destiné à illustrer le type de moyens à mettre en oeuvre dans une station mobile, pour utiliser un procédé de coordination suivant l'invention.

De manière connue, une station mobile comporte des moyens 10 dits d'interface avec le réseau, ou encore interface-air, permettant:
- d'une part de mettre des informations issues de moyens d'interface homme-machine 11, dans une forme admissible pour leur transmission sur ledit interface-air,
- d'autre part de restituer des informations reçues sur cet interface-air, pour transmission auxdits moyens d'interface homme-machine 11.

Les moyens 10 d'interface-air comportent eux-mêmes, de manière connue, une chaîne émission-réception 12 incluant des fonctions de traitement en bande de base et des fonctions radioélectriques, et des moyens 13 dits de commande pour commander cette chaîne émission-réception, de manière à transmettre et recevoir des informations dans la forme admissible pour leur transmission sur ledit interface-air.

Dans le cas d'une station mobile apte à accéder simultanément à des services en mode circuit et en mode paquet, lesdits moyens de commande 13 sont en outre, de manière connue, adaptés pour autoriser un tel fonctionnement simultané, notamment en prévoyant, pour la coordination entre station mobile et réseau, en vue de la préparation d'un transfert de communication d'une cellule à une autre, en plus d'une procédure de coordination propre au mode circuit, une procédure de coordination propre au mode paquet.

Suivant l'invention, lesdits moyens de commande 13 sont en outre adaptés pour optimiser le fonctionnement du système dans le cas de simultanéité de services, essentiellement en prévoyant une commande particulière pour informer le réseau d'une entrée en simultanéité de services.

Lesdits moyens de commande 13 peuvent en outre être adaptés pour optimiser encore ce fonctionnement, en prévoyant une commande particulière supplémentaire pour informer le réseau d'une fin de simultanéité de services.

Les moyens 13 étant en pratique réalisés par des moyens de traitement (notamment microprocesseur), de telles commandes particulières sont en pratique obtenues par une programmation correspondante de ces moyens de traitement.

Les moyens 13 disposent par ailleurs des informations nécessaires à la détection d'une entrée en simultanéité de services, ou d'une fin de simultanéité de services.

L'information du réseau d'une entrée en simultanéité de services ou d'une fin de simultanéité de services est en outre réalisée en utilisant les techniques de signalisation courantes. Une telle information est par ailleurs effectuée le plus tôt possible (c'est-à-dire dès qu'une ressource de signalisation est disponible pour une telle utilisation, dans le sens montant, c'est-à-dire dans le sens station mobile vers réseau).

Le schéma de la figure 4 est destiné à illustrer le type de moyens à mettre en oeuvre, pour utiliser le procédé de coordination suivant l'invention, dans une entité de réseau de radiocommunications mobiles (notamment BSS dans un réseau tel que le réseau GSM) en relation avec les stations mobiles pour ladite coordination.

De manière connue, une telle entité comporte des moyens 20 dits d'interface-air permettant:
- d'une part de mettre des informations issues d'une entité 21 dite de niveau supérieur du réseau considéré, dans une forme admissible pour leur transmission sur ledit interface-air,
- d'autre part de restituer des informations reçues sur ledit interface-air, pour transmission à ladite entité de niveau supérieur 21.

De même que décrit précédemment pour la station mobile, les moyens 20 d'interface-air comportent eux-mêmes classiquement une chaîne émission-réception 22 incluant des fonctions radioélectriques et des fonctions de traitement en bande de base, et des moyens 23 dits de commande pour commander cette chaîne émission-réception de manière à transmettre et recevoir des informations dans la forme admissible pour la transmission sur ledit interface-air.

De même, dans le cas d'un système apte à fournir simultanément des services en mode circuit et des services en mode paquet, lesdits moyens de commande 23 sont en outre, de manière connue, adaptés pour autoriser un tel fonctionnement simultané, notamment en prévoyant, pour la coordination entre station mobile et réseau, en vue de la préparation du transfert d'une communication d'une cellule à une autre, en plus d'une procédure de coordination propre au mode circuit, une procédure de coordination propre au mode paquet.

De même, suivant l'invention, lesdits moyens de commande 23 sont en outre adaptés pour optimiser le fonctionnement du système, en cas de simultanéité de services, essentiellement en prévoyant, dans l'exemple d'application considéré, une commande particulière pour sélectionner, le cas échéant, une procédure de coordination correspondant à un degré moins élevé de contrôle par le réseau, pour le mode paquet, en réponse à une information d'entrée en simultanéité de services reçue d'une station mobile.

Plus généralement, quel que soit l'exemple d'application, lesdits moyens de commande 23 sont en outre adaptés pour optimiser le fonctionnement du système, en cas de simultanéité de services, en prévoyant une commande particulière pour mettre en oeuvre de façon non totalement indépendante les procédures de coordination relatives aux différents types de services auxquels la station mobile accède simultanément, en réponse à une information d'entrée en simultanéité de services reçue d'une station mobile, pour tenir compte de cette simultanéité de services, de manière à optimiser l'utilisation des ressources de transmission pour ladite coordination.

Notamment, dans le cas de réseau apte à sélectionner, pour un premier type de service, l'une ou l'autre de plusieurs procédures de coordination, correspondant respectivement à des degrés d'autonomie décroissants de la station mobile, ou à des degrés croissants de contrôle par le réseau, et pour un deuxième type de service, une procédure de coordination unique, correspondant à un degré donné d'autonomie de la station mobile, ou à un degré donné de contrôle par le réseau, lesdits moyens de commande sont en outre adaptés pour optimiser le fonctionnement du système, en cas de simultanéité de services, en prévoyant une commande particulière pour , le cas échéant, sélectionner, en réponse à une information d'entrée en simultanéité de services reçue d'une station mobile, une procédure de coordination correspondant à un degré de contrôle par le réseau, pour ledit premier type de service, qui tienne compte du degré de contrôle par le réseau pour la procédure de coordination relative audit deuxième type de service.

Ainsi, dans l'exemple d'application considéré ici, c'est-à-dire dans le cas de premier type de service constitué par des services en mode paquet, de deuxième type de service constitué par des services en mode circuit, et de coordination en vue de la préparation de transfert de communication en cours d'une cellule à une autre dans un réseau de radiocommunications cellulaire, le réseau étant apte à sélectionner, pour le mode paquet, l'une ou l'autre de plusieurs procédures de coordination, correspondant respectivement à des degrés d'autonomie décroissants de la station mobile, ou à des degrés croissants de contrôle par le réseau, et, pour le mode circuit, une procédure de coordination unique, correspondant à un degré le plus élevé de contrôle par le réseau, lesdits moyens de commande 23 sont en outre adaptés pour optimiser le fonctionnement du système, en cas de simultanéité de services, en prévoyant une commande particulière pour, le cas échéant, sélectionner une procédure de coordination correspondant à un degré moins élevé de contrôle par le réseau, pour le mode paquet, en réponse à une information d'entrée en simultanéité de services reçue d'une station mobile.

De même lesdits moyens de commande 23 peuvent en outre être adaptés pour optimiser encore ce fonctionnement, en cas de simultanéité de services, en prévoyant en outre, dans l'exemple d'application considéré, une commande particulière supplémentaire pour, le cas échéant, resélectionner une procédure correspondant à un degré plus élevé de contrôle par le réseau, pour le mode paquet, en réponse à une information de fin de simultanéité de services reçue d'une station mobile.

Plus généralement, quel que soit l'exemple d'application considéré, lesdits moyens de commande 23 peuvent en outre être adaptés pour optimiser encore ce fonctionnement, en cas de simultanéité de services, en prévoyant en outre, dans l'exemple d'application considéré, une commande particulière supplémentaire pour, le cas échéant, remettre en oeuvre de façon indépendante une procédure de coordination relative à celui des types de services auxquels la station mobile continue d'accéder, en réponse à une information de fin de simultanéité de services reçue d'une station mobile.

Notamment, dans le cas de réseau apte à sélectionner, pour un premier type de service, l'une ou l'autre de plusieurs procédures de coordination, correspondant respectivement à des degrés d'autonomie décroissants de la station mobile, ou à des degrés croissants de contrôle par le réseau, et, pour un deuxième type de service, une procédure de coordination unique, correspondant à un degré donné d'autonomie de la station mobile, ou à un degré donné de contrôle par le réseau, lesdits moyens de commande 23 peuvent en outre être adaptés pour optimiser encore ce fonctionnement, en cas de simultanéité de services, en prévoyant en outre une commande particulière supplémentaire pour, le cas échéant, resélectionner, de manière indépendante, une procédure de coordination pour ledit premier type de service, en réponse à une information de fin de simultanéité de services reçue d'une station mobile.

Ainsi, dans le cas de premier type de service constitué par des services en mode paquet, de deuxième type de service constitué par des services en mode circuit, et de coordination en vue de la préparation de transfert de communication en cours d'une cellule à une autre dans un réseau de radiocommunications cellulaire, le réseau étant apte à sélectionner, pour le mode paquet, l'une ou l'autre de plusieurs procédures de coordination, correspondant respectivement à des degrés d'autonomie décroissants de la station mobile, ou à des degrés croissants de contrôle par le réseau, et, pour le mode circuit, une procédure de coordination unique, correspondant à un degré le plus élevé de contrôle par le réseau, lesdits moyens de commande 23 peuvent en outre être adaptés pour optimiser encore ce fonctionnement, en cas de simultanéité de services, en prévoyant en outre une commande particulière supplémentaire pour, le cas échéant, resélectionner une procédure de coordination correspondant à un degré plus élevé de contrôle par le réseau, pour le mode paquet, en réponse à une information de fin de simultanéité de services reçue d'une station mobile.

De même, les moyens 23 étant en pratique réalisés par des moyens de traitement (notamment microprocesseur), de telles commandes particulières sont en pratique obtenues par une programmation correspondante de ces moyens de traitement.

## Revendications

1. Procédé de coordination entre station mobile (MS) et réseau (BSS), pour la gestion des ressources de transmission dans un système de radiocommunications mobiles fournissant plusieurs types de services, et dans lequel une procédure de coordination est mise en oeuvre séparément pour chacun des types de services auxquels une station mobile accède simultanément, caractérisé en ce qu'il comporte une étape (1) au cours de laquelle la station mobile informe le réseau d'une entrée en simultanéité de services, afin de mettre en oeuvre de façon non totalement indépendante les procédures de coordination relatives aux différents types de services auxquels la station mobile accède simultanément, pour tenir compte de cette simultanéité de services, de manière à optimiser l'utilisation des ressources de transmission pour ladite coordination.

2. Procédé selon la revendication 1, caractérisé en ce que ledit réseau est apte à sélectionner, pour un premier type de service, l'une ou l'autre de plusieurs procédures de coordination, correspondant respectivement à des degrés d'autonomie décroissants de la station mobile, ou à des degrés croissants de contrôle par le réseau, et pour un deuxième type de service, une procédure de coordination unique, correspondant à un degré donné d'autonomie de la station mobile, ou à un degré donné de contrôle par le réseau, et en ce que ce procédé comporte une étape (1) au cours de laquelle la station mobile informe le réseau d'une entrée en simultanéité de services, afin, le cas échéant, de faire sélectionner par le réseau une procédure de coordination correspondant à un degré de contrôle par le réseau, pour ledit premier type de service, qui tienne compte du degré de contrôle par le réseau pour la procédure de coordination relative audit deuxième type de service.

3. Procédé selon la revendication 2, caractérisé en ce que, dans le cas de premier type de service constitué par des services en mode paquet, de deuxième type de service constitué par des services en mode circuit, et de coordination en vue de la préparation de transfert de communication en cours d'une cellule à une autre dans un réseau de radiocommunications cellulaire, le réseau étant apte à sélectionner, pour le mode paquet, l'une ou l'autre de plusieurs procédures de coordination, correspondant respectivement à des degrés d'autonomie décroissants de la station mobile, ou à des degrés croissants de contrôle par le réseau, et, pour le mode circuit, une procédure de coordination unique, correspondant à un degré le plus élevé de contrôle par le réseau, ce procédé comporte une étape (1) au cours de laquelle la station mobile informe le réseau d'une entrée en simultanéité de services, afin , le cas échéant, de faire sélectionner par le réseau une procédure de coordination correspondant à un degré moins élevé de contrôle par le réseau, pour le mode paquet.

4. Procédé selon la revendication 1, caractérisé en ce qu'il comporte en outre une étape (3) au cours de laquelle la station mobile informe le réseau d'une fin de simultanéité de services, afin, le cas échéant, de remettre en oeuvre, de façon indépendante, une procédure de coordination relative à celui des types de services auxquels la station mobile continue d'accéder.

5. Procédé selon la revendication 2, caractérisé en ce qu'il comporte en outre une étape (3) au cours de laquelle la station mobile informe le réseau d'une fin de simultanéité de services, afin, le cas échéant, de faire resélectionner par ce réseau, de manière indépendante, une procédure de coordination pour ledit premier type de service.

6. Procédé selon la revendication 3, caractérisé en ce qu'il comporte en outre une étape (3) au cours de laquelle la station mobile informe le réseau d'une fin de simultanéité de services, afin, le cas échéant, de faire resélectionner par ce réseau une procédure de coordination correspondant à un degré plus élevé de contrôle par le réseau, pour le mode paquet.

7. Station mobile pour la mise en oeuvre du procédé suivant l'une des revendications 1 à 6, caractérisée en ce qu'elle comporte des moyens (13) pour informer le réseau d'une entrée en simultanéité de services.

8. Station mobile selon la revendication 7, pour la mise en oeuvre d'un procédé selon l'une des revendications 4 à 6, caractérisée en ce qu'elle comporte en outre des moyens (13) pour informer le réseau d'une fin de simultanéité de services.

9. Entité pour réseau de radiocommunications mobiles, en relation avec des stations mobiles pour la mise en oeuvre d'un procédé de coordination suivant l'une des revendications 1 à 6, caractérisée en ce qu'elle comporte des moyens (23) pour mettre en oeuvre de façon non totalement indépendante les procédures de coordination relatives aux différents types de services auxquels la station mobile accède simultanément, en réponse à une information d'entrée en simultanéité de services reçue d'une station mobile, pour tenir compte de cette simultanéité de services, de manière à optimiser l'utilisation des ressources de transmission pour ladite coordination.

10. Entité pour réseau de radiocommunications mobiles, en relation avec des stations mobiles pour la mise en oeuvre d'un procédé de coordination suivant l'une des revendications 2 à 6, caractérisée en ce qu'elle comporte des moyens (23) pour, le cas échéant, sélectionner, en réponse à une information d'entrée en simultanéité de services reçue d'une station mobile, une procédure de coordination correspondant à un degré de contrôle par le réseau, pour ledit premier type de service, qui tienne compte du degré de contrôle par le réseau pour la procédure de coordination relative audit deuxième type de service.

11. Entité pour réseau de radiocommunications mobiles, en relation avec des stations mobiles pour la mise en oeuvre d'un procédé de coordination suivant l'une des revendications 3 à 6, caractérisée en ce qu'elle comporte des moyens (23) pour, le cas échéant, sélectionner une procédure de coordination correspondant à un degré moins élevé de contrôle par le réseau, pour le mode paquet, en réponse à une information d'entrée en simultanéité de services reçue d'une station mobile.

12. Entité pour réseau de radiocommunications mobiles, en relation avec des stations mobiles pour la mise en oeuvre d'un procédé de coordination suivant l'une des revendications 4 à 6, caractérisée en ce qu'elle comporte en outre des moyens (23) pour, le cas échéant, remettre en oeuvre de façon indépendante une procédure de coordination relative à celui des types de services auxquels la station mobile continue d'accéder, en réponse à une information de fin de simultanéité de services reçue d'une station mobile.

13. Entité pour réseau de radiocommunications mobiles, en relation avec des stations mobiles pour la mise en oeuvre d'un procédé de coordination suivant l'une des revendications 5 et 6, caractérisée en ce qu'elle comporte des moyens (23) pour, le cas échéant, resélectionner, de manière indépendante, une procédure de coordination pour ledit premier type de service, en réponse à une information de fin de simultanéité de services reçue d'une station mobile.

14. Entité pour réseau de radiocommunications mobiles, en relation avec des stations mobiles pour la mise en oeuvre d'un procédé de coordination suivant la revendication 6, caractérisée en ce qu'elle comporte des moyens (23) pour, le cas échéant, resélectionner une procédure de coordination correspondant à un degré plus élevé de contrôle par le réseau, pour le mode paquet, en réponse à une information de fin de simultanéité de services reçue d'une station mobile.
